# EUROPEAN PATENT SPECIFICATION

(11) **EP 0 865 349 B1**
(45) Date of publication and mention of the grant of the patent: **20.10.1999**
(21) Application number: 96912203.5
(22) Date of filing: 24.04.1996
(51) Int. Cl.: B29C 43/42

(54) **A PROCESS FOR REALIZING PLASTIC CAP ASSEMBLIES FOR CONTAINERS**
VERFAHREN ZUR HERSTELLUNG VON ZUSAMMENGESETZTEN KUNSTSTOFFVERSCHLUSSKAPPEN FÜR BEHÄLTER
PROCEDE DE FABRICATION D'ENSEMBLES BOUCHONS EN PLASTIQUE POUR RECIPIENTS

(30) Priority: 22.09.1995 IT MO950129
(43) Date of publication of application: 23.09.1998
(73) Proprietor: Bormioli Rocco & Figlio S.p.A., 43100 Parma (PR) (IT)
(72) Inventor: MORINI, Emilio, I-43052 Colorno (IT)
(74) Representative: Gotra, Stefano
(86) International application number: IT9600081
(87) International publication number: WO9710937

(56) References cited:
- EP-A- 0 099 171
- GB-A- 2 108 892
- GB-A- 2 141 414
- GB-A- 2 172 273
- GB-A- 2 187 177
- US-A- 4 256 234

## Description

### Technical Field.

The invention relates to a process for realizing plastic caps in the field of containers for water, soft drinks, and liquids in general.

### Background Art.

For some time now caps have been in use which comprise, briefly, a cap for opening and closing the container and a device, usually a security strip, which evidences whether the container has in fact been opened at least once.

The relatively low cost of each such cap assembly and the very high number of pieces utilized mean that even a small improvement, whether in cap shape or in the process for realizing the cap assembly, is extremely important; such small improvements can indeed lead to enormous savings in the production of the objects.

Firstly metal caps were devised, but these have been gradually replaced by plastic caps, since they were expensive and brought about the need to perform mechanical machining subsequent to their manufacture, such as for example edge-tapping for connection with the various components of the cap assembly, or adjustments during their attachment to the container.

A first process for realizing plastic caps comprised an injection of fluid-state plastic into specially-shaped dies. Caps of various types could be obtained thus.

Documents GB 2187177 and GB 2141414 disclose a process wherein the elements of the cap assembly, i.e. the cap and an annular element, are molded separately before they are joined. The annular element is conformed in such a way that when the cap assembly is first used to open the container a first annular part of the annular element remains constrained to the cap and a second annular part thereof fractures perceptibly. The annular element also exhibits a third part which extends radially and which is destined to constitute a seal for the cap.

This technology, however, presents a drawback: the machines for the injection of the plastic achieve only moderate production levels, which obviously influences the cost of the final product. In the attempt to increase productivity, multiple dies are used, so that for each injection several caps are obtained. This increases productivity but at the same time adds to the complexity of the dies and thus to production costs.

The prior art also teaches the technology of forming by compression and subsequent mechanical machining. GB 2108892 teaches this technology which consists of introducing a small piece of plastic material into the matrix of a die and deforming the material by means of a punch which penetrates the matrix and causes the material to occupy all available space remaining between the punch and the matrix - which space obviously corresponds to the shape of the cap to be obtained.

This stage of the process produces plastic caps with a single pressing operation, and also at the same time produces the security strip destined to detach from the cap when it is first removed from the container. Further mechanical operations realize the fracture line between the cap and the security strip and the tabs for constraining of the cap assembly to the container. In many cases a still further operation is performed to obtain a seal internally of the cap.

An advantage of these machines is that the die is simple and can be installed in series in rotary machines comprising a large number of punch-matrix die groups. These machines are extremely fast and therefore very highly productive.

The disadvantage of this technology is that it provides caps which in some cases require a further forming stage to obtain the seal, and in all cases require further mechanical operations. It has been attempted to manufacture these caps using laterally-opening dies (see EP 0099171), but the complication in the die construction has rendered this solution impracticable.

The main aim of the present invention is to provide a process by which a plastic cap assembly can be manufactured at reduced costs.

### Disclosure of the Invention.

This aim is achieved by the process, as it is characterised in the claims that follow the present description.

The process, specifically intended for realizing plastic caps, comprises a first stage wherein a plastic material is press-formed to obtain a cap for opening and closing a container for which it is destined.

The process further comprises a second stage wherein a plastic material is press-formed to obtain an annular element for the cap, which element will be a connecting organ between cap and container.

The annular element is conformed such that when the cap is first used a first annular part will remain constrained to the cap while a second annular part will fracture perceptibly. The annular element is also conformed such that the first annular part and the second annular part have differing diameters and are interconnected by means of easy-break ribs. Given the conformation of the annular element, the ribs extend radially and can easily be obtained by means of press-forming using simple dies.

In this second stage, the annul a element can advantageously exhibit a third part destined to constitute a seal for the cap. This third part is obtained internally of the annular element and, before assembly of the cap, is connected to the annular element by means of easy-break ribs. The third part also extends radially and can easily be obtained by press-forming using simple dies.

Finally, the process includes an assembly stage of the two cap elements, realized in such a way that the first part of the connecting organ is constrained to the cap. If the annular element is provided with the third part, namely the seal , this is forced into the upper internal part of the cap.

The proposed process does not intend to present a new type of cap, but to provide a new manufacturing process for both known and new caps, which process has the characteristic of improving the known manufacturing process of using press-forming only for making cap assemblies wherein the cap and the security strip are realised in a single piece which thereafter is subject to mechanical operations.

The process described can advantageously be used for manufacturing known-type caps, such as for example the cap described in GB patent GB 2,141,414 belonging to the present applicant, which comprises elements having a conformation and functional characteristics which are like those described in the present description. Obviously new-type caps can also be used, as long as their characteristics are compatible with those described herein.

The process enables productivity of known-type caps, previously obtained only by injection, to be considerably increased.

## Claims

1. A process for realizing plastic cap assemblies, comprising the following stages:
a first forming stage wherein a cap for opening and closing a container is obtained;
a second forming stage where an annular element of said cap assembly is obtained, the annular element being destined to function as a connecting organ between the cap and the container and conformed in such a way that when the cap assembly is first used to open said container a first annular part of said annular element remains constrained to the cap and a second annular part thereof fractures perceptibly, said first annular part and said second annular part being interconnected by means of easy-break ribs;
an assembly stage of the cap and annular element wherein said annular part of said annular element is constrained to said cap;
characterized in that:
in the first forming stage a plastic material is press-formed to obtain said cap;
in the second forming stage a plastic material is press-formed to obtain said annular element, said second part thereof having a different diameter to a diameter of said first part thereof.

2. A process as in claim 1, characterised in that said second stage of press-forming of a plastic material is performed in order to obtain said annular element which, apart from being conformed in such a way that on first use of the cap assembly to open said container a first part of said second annular element remains constrained to the cap and a second part thereof fractures perceptibly, also exhibits a third part destined to constitute a seal for the cap.

3. A process as in claim 2, characterized in that during said assembly stage, said third part of the second annular element is forced into an upper internal part of the cap.

4. A process as in claim 1, characterized in that said first part and said second part of said annular element obtained during the second press-forming stage are interconnected by means of easy-break ribs which extend radially.

## Patentansprüche

1. Verfahren zur Herstellung von zusammengesetzten Kunststoffverschlusskappen, enthaltend die folgenden Phasen:
eine erste Formphase, in welcher eine Kappe zum Öffnen und Verschliessen eines Behälters erhalten wird;
eine zweite Formphase, in welcher ein ringförmiges Element der genannten zusammengesetzten Kappe erhalten wird, wobei das ringförmige Element dazu bestimmt ist, ein Verbindungsorgan zwischen der Kappe und dem Behälter zu bilden und auf solche Weise ausgebildet ist, dass, wenn die zusammengesetzte Kappe zum ersten Mal zum Öffnen des genannten Behälters benutzt wird, ein erster ringförmiger Teil des genannten ringförmigen Elementes an der Kappe festgehalten bleibt und ein zweiter ringförmiger Teil desselben deutlich vernehmbar bricht, wobei der genannte erste ringförmige Teil und der genannte zweite ringförmige Teil durch leicht brechbare Stege miteinander verbunden sind;
eine Phase des Zusammensetzens der Kappe und des ringförmigen Elementes, bei welcher der genannte ringförmige Teil des genannten ringförmigen Elementes an der genannten Kappe festgehalten wird;
**dadurch gekennzeichnet**, dass in der ersten Formphase ein Kunststoffmaterial pressgeformt ist, um die genannte Kappe zu erhalten;
in der zweiten Formphase ein Kunststoffmaterial pressgeformt ist, um das genannte ringförmige Element zu erhalten, wobei der genannte zweite Teil desselben einen anderen Durchmesser im Verhältnis zu dem Durchmesser des genannten ersten Teils desselben aufweist.

2. Verfahren nach Patentanspruch 1, **dadurch gekennzeichnet**, dass die genannte zweite Phase des Pressformens eines Kunststoffmaterials ausgeführt wird, um das genannte ringförmige Element zu erhalten, welches, abgesehen davon, dass es auf solche Weise ausgebildet ist, dass bei der ersten Benutzung der zusammengesetzten Kappe mm Öffnen des genannten Behälters ein erster Teil des genannten zweiten ringförmigen Elementes an der Kappe befestigt bleibt und ein zweiter Teil desselben deutlich vernehmbar bricht, auch einen dritten Teil aufweist, der dazu bestimmt ist, eine Dichtung für die Kappe zu bilden.

3. Verfahren nach Patentanspruch 2, **dadurch gekennzeichnet**, dass während der Phase des Zusammensetzens der genannte dritte Teil des zweiten ringförmigen Elementes in einen oberen internen Bereich der Kappe eingepresst wird.

4. Verfahren nach Patentanspruch 1, **dadurch gekennzeichnet**, dass der genannte erste Teil und der genannte zweite Teil des genannten ringförmigen Elementes, erhalten während der zweiten Phase des Pressformens, mit Hilfe von leicht brechbaren Stegen miteinander verbunden sind, welche sich radial erstrecken.

## Revendications

1. Un procédé pour la fabrication d'ensembles bouchons en plastique, comprenant les phases successives:
une phase de moulage dans laquelle est obtenu un bouchon pour ouvrir et refermer un conteneur;
une seconde phase de moulage dans laquelle un élément anulaire dudit ensemble bouchon est obtenu, l'élément anulaire étant destiné à fonctionner comme un organe de connection entre le bouchon et le conteneur et conformé de manière à ce que, lorsque l'ensemble bouchons est utilisé pour la première fois pour ouvrir ledit conteneur, une première partie anulaire dudit élément anulaire reste solidaire du bouchon et une autre partie anulaire se fracture perceptiblement, la première et la seconde partie anulaire étant reliées au moyen de nervures de rupture facile;
une phase d'assemblage du bouchon et de l'élément anulaire dans laquelle la partie anulaire dudit élément anulaire est solidaire dudit bouchon;
caractérisé en ce que:
dans la phase de moulage un matériau plastique est moulé par compression pour obtenir ledit élément anulaire, ladite seconde partie de celui-ci ayant un diamètre différent d'un diamètre de ladite première partie.

2. Un procédé selon la revendication 1, caractérisé en ce que la seconde phase de moulage par compression d'un matériau plastique est réalisée de manière à obtenir ledit élément anulaire qui, en plus d'être conformé de manière à ce que, lors de la première installation de l'ensemble bouchons pour ouvrir ledit conteneur, une première partie dudit second élément anulaire reste solidaire du bouchon et une seconde partie se fracture perceptiblement, présente également une troisième partie destinée à constituer un joint pour le bouchon.

3. Un procédé selon la revendication 2, caractérisé en ce que pendant ladite phase d'assemblage, ladite troisième partie du second élément anulaire est encastrée dans la partie supérieure interne du bouchon.

4. Un procédé selon la revendication 1, caractérisé en ce que ladite première partie et ladite seconde partie dudit élément anulaire obtenu pendant la seconde phase de moulage par compression sont reliées par l'intermédiaire de nervures de rupture facile qui s'étendent radialement.
